# EUROPEAN PATENT SPECIFICATION

(11) **EP 2 855 635 B1**
(45) Date of publication and mention of the grant of the patent: **25.04.2018**
(21) Application number: 13728301.6
(22) Date of filing: 03.06.2013
(51) Int. Cl.: C10G 45/10, C10G 45/12, C10G 45/62, C10G 3/00, C10G 45/64, C10G 65/02

(54) **HYDRODESULFURIZATION, DEOXYGENATION AND DEWAXING PROCESSES WITH WATER STABLE CATALYSTS FOR BIOMASS-CONTAINING HYDROCARBON FEEDSTOCKS**
HYDROENTSCHWEFELUNGS-, SAUERSTOFFENTFERNUNGS- UND ENTWACHSUNGSVERFAHREN MIT WASSERFESTEN KATALYSATOREN FÜR BIOMASSEHALTIGE KOHLENWASSERSTOFFEINSÄTZE
PROCÉDÉS D'HYDRODÉSULFURATION, DE DÉSOXYGÉNATION ET DE DÉPARAFFINAGE DE CHARGES HYDROCARBONÉES CONTENANT DE LA BIOMASSE À L'AIDE DE CATALYSEURS STABLES DANS L'EAU

(30) Priority: 04.06.2012 US 201261655217 P; 31.05.2013 US 201313906907
(43) Date of publication of application: 08.04.2015
(73) Proprietor: ExxonMobil Research and Engineering Company, Annandale, NJ 08801-0900 (US)
(72) Inventor: FINGLAND, Bradley, R., Annandale, NJ 08801 (US); GATT, Joseph, Emmanuel, Annandale, NJ 08801 (US)
(74) Representative: ExxonMobil Chemical Europe Inc.
(86) International application number: PCT/US2013/043826
(87) International publication number: WO 2013/184545

(56) References cited:
- US-A1- 2010 083 563
- US-A1- 2010 176 026
- US-A1- 2011 219 669

## Description

### FIELD OF THE INVENTION

This invention relates to a method for processing feedstreams containing both sulfur-containing mineral oils and biomass-derived feedstocks in a single reactor configuration. The process produces a desulfurized, deoxygenated and dewaxed hydrocarbon product having reduced oxygen content, increased iso-paraffin content, low n-paraffin content, and good cold flow properties.

### BACKGROUND

With decreasing availability of fossil carbon resources, there is an increasing demand for alternative resources for use as hydrocarbon based fuels and chemical base stocks. Biomass feedstocks present an enormous potential in this respect, as they are renewable and can be CO₂ neutral. In contrast to crude oil (upon which "mineral oils" may be derived), however, biomass and biomass-derived materials typically contain large concentrations of oxygenates. In most cases, the oxygen atoms are removed as water during deoxygenation processing, and, in some cases such as pyrolysis oil, the feed already contains large amounts of water.

A problem that exists is that most existing refinery processes and associated equipment are designed to process only crude oils or "mineral oil" based feedstocks. Processing of biomass derived feedstocks often requires separate processing steps, equipment and catalysts for converting these feedstocks into motor fuels and chemical feedstocks and such process may not be compatible with co-processing of these conventional (mineral oil) feedstocks. The existing refinery systems designed for processing strictly mineral based feedstocks are not designed with dedicated processes to handle both the biomass derived feedstocks and the conventional feedstocks separately. Costs to do so would be prohibited.

Presently, there are many differing mandates in the different countries requiring a portion of the motor fuel pool be derived from biomass components. However, most of these mandated percentages are small (typically from about 5 to 20% of the fuel composition to be based on biomass/biofuels) with crude oils / mineral oils still making up the vast majority of the fuel composition.

This is forcing conventionally crude processing refineries to invent new processes and catalysts for co-processing these mineral oil / biomass feedstocks, which as discussed, can often be incompatible with conventional refinery equipment, processes and catalysts. A further restrictive factor is that the economics are prohibitive for a refinery to invest significant additional capital dollars to add or considerably alter the existing process equipment. This includes restrictions on significantly modifying existing process configurations that are designed to upgrade mineral oil based feedstocks into motor fuels, chemical feedstocks and other hydrocarbon products. Other restrictions, such as limited land space, may additionally prohibit the significantly modification/addition of associated process equipment. A particularly expensive and prohibitive cost would be the need to add or replace a high pressure reactor associated with hydroprocessing of mineral oils in order to separately upgrade such mixed feedstocks.

As noted prior, the processing of most biomass derived feedstocks, or the portion there of which has been mixed with conventional feedstocks, requires the removal of oxygen that is inherently in the biomass feedstocks. This has not been an issue addressed in conventional refining processes as most crude feedstocks do not contain appreciable amounts of oxygen.

Water is known to have a deactivating effect on many catalytic systems used in conventional refinery-type processes. Catalysts containing alumina are known to be very sensitive to water, even at very low concentrations (in the parts per million range). Several prior art references describing catalyst compositions effective for deoxygenation also note the necessity for maintaining low oxygenate concentrations in the feedstocks.

For instance, the article by J. Hancsok et al. (Microporous and Mesoporous Materials, 101 (2007), 148-152) describes a metal/zeolite catalyst used for isomerizing oxygenate-containing feedstocks. The catalyst is bound with alumina, and it is noted that oxygenate contents of just over 1% in the feedstock cause a 50% acidity loss, indicating a reduced conversion activity. Additionally, the article by O.V. Kikhtyanin et al. (Fuel, 89 (2010), 3085-3092) describes a metal/SAPO catalyst, also bound with alumina, which is used for hydroconversion of sunflower oil. It was noted that fast deactivation was observed in tandem with high oxygenate concentrations (relative to non-oxygenated hydrocarbon concentrations), although the goal of the study was to find processing conditions that mitigated such issues.

Indeed, catalysts containing alumina can be among the most effective catalysts for many necessary processes, such as heteroatom removal (e.g., deoxygenation) and isomerization. Water-induced deactivation of such catalysts can occur via numerous mechanisms (*e.g*., sintering, titration of acid sites, competitive adsorption, zeolite support dealumination, and reduction of mechanical stability, *inter alia*), and such deactivation should be an increasingly important issue, due to the increasing demand for biofuels and other biomass-derived products.

A significant problem that exists with the co-processing of feedstocks containing a mixture of both mineral oils and biomass, is that there is still a need to remove a significant amount of sulfur from the combined feedstock (which is typically associated with the mineral oil component) while simultaneously removing a significant amount of oxygen, and resultant water from the combined feedstock (which is typically associated with the biomass component). As noted prior, achieving both of these simultaneously in a given refinery process and catalyst system has resulted in less than adequate results mainly due to catalyst instability and/or significant losses in hydrodesulfurization efficiencies in the catalyst system. US2011/0219669 discloses a method for processing a feedstock comprised of a mineral oil component and a biomass oil component.

What is needed in the industry is a solution to this problem faced by refineries to co-process feedstocks containing a mixture of both mineral oils and biomass while working within the constraints of existing equipment and processes to achieve fuel products that meet refinery specifications such as biomass content, oxygen content, sulfur content, and cloud point.

### SUMMARY OF PREFERRED EMBODIMENTS OF THE INVENTION

The embodiments of the invention herein are process & catalyst solutions to enable existing mineral oil refineries to co-process feedstocks containing a mixture of both mineral oils and biomass to achieve fuel products that meet refinery specifications such as biomass content, oxygen content, sulfur content, and cloud point while maximizing the use of existing refinery equipment.

The method according to the invention is defined in claim 1.

In other preferred embodiments, at least one liquid motor fuel product is produced from a diesel boiling range fraction of the reactor effluent product wherein the cloud point of the diesel boiling range fraction is less than 0°C.

In preferred embodiments, the hydrocarbon feedstock contains from 80 wt% to about 98 wt% of the mineral oil component and from 2 wt% to about 20 wt% of the biomass oil component, the mineral oil component contains at least 500 ppmw sulfur, and the reactor effluent product contains less than 100 ppmw sulfur. In other preferred embodiments, the second hydroprocessing conditions include a water partial pressure of greater than 2 psia, greater than 5 psia, or even greater than 10 psia.

### BRIEF DESCRIPTION OF THE DRAWINGS

FIGURE 1 illustrates a simplified of a process schematic of a first embodiment of the hydroprocessing reactor system and associated product separation systems of invention.
FIGURE 2 illustrates a simplified process schematic of a second embodiment of the hydroprocessing reactor system and associated product separation systems of invention.
FIGURE 3 shows comparative GC-MS spectra of a stearic acid feed converted using two different catalyst compositions having identical metal and support components but differing in the binder component.

### DETAILED DESCRIPTION OF THE EMBODIMENTS

The present invention relates to processes and catalysts for producing a desulfurized, deoxygenated, and dewaxed hydrocarbon motor fuel product stream from a hydrocarbon feedstock comprised of a mineral oil component and a biomass oil component utilizing a two-part catalyst system in a single hydroprocessing reactor. Preferably, an existing refinery hydroprocessing reactor can be utilized in the processes herein to economically retrofit an existing conventional (mineral oil) refining process into a process for refining the hydrocarbon feedstock comprised both the mineral oil and biomass oil components.

### Feedstock

The processes and catalysts of invention herein are designed to process mixed hydrocarbon feedstock comprised of both a mineral oil (or "conventional oil") component and a biomass oil (or "biomass" or "biomass-derived" or "biofeed") component.

In an embodiment, the hydrocarbon feedstock can have an initial boiling point of at least about 200°F (93°C), or at least about 250°F (121°C), or at least about 300°F (149°C), or at least about 350°F (177°C), or at least about 400°F (204°C), or at least about 450°F (232°C). The initial boiling can vary widely, depending on how much kerosene or other lighter distillate components are included in a feedstock. In another embodiment, the hydrocarbon feedstock can have a final boiling point of about 800°F (427°C) or less, or about 750°F (399°C) or less, or about 700°F (371°C) or less. Alternatively, in embodiments where fractionation is used to produce both a heavy diesel fraction and a separate bottoms fraction, the final boiling point can be about 1100°F (593°C) or less, or about 1000°F (538°C) or less, or about 900°F (482°C) or less. Another way of characterizing a feedstock is based on the boiling point required to boil a specified percentage of the feed. For example, the temperature required to boil at least 5 wt% of a feed is referred to as a "T5" boiling point. When characterizing a feed based on a T5 boiling point, the feedstock can have a T5 boiling point at least about 200°F (93°C), or at least about 250°F (121°C), or at least about 300°F (149°C), or at least about 350°F (177°C), or at least about 400°F (204°C), or at least about 450°F (232°C). In another embodiment, the feed can have a T95 boiling point of about 800°F (427°C) or less, or about 750°F (399°C) or less, or about 700°F (371°C) or less. Examples of suitable feeds include various atmospheric and/or vacuum gas oil feeds, diesel boiling range feeds, and feeds corresponding to mixtures thereof.

In one embodiment, the hydrocarbon feedstock can include at least 0.5 wt% biomass, based on total weight of the hydrocarbon feedstock provided, more preferably at least 1 wt%; for example at least 2 wt%, at least 3 wt%, at least 4 wt%, at least 5 wt%, at least 10 wt%, at least 20 wt%, at least 30 wt%, at least 40 wt%, at least 50 wt%, at least 60 wt%, at least 70 wt%, at least 80 wt%, at least 90 wt%, at least 95 wt%, or at least 99 wt%.

Preferably, the biomass component is from about 2 wt% to about 20 wt%, or more preferably from about 5 wt% to about 15 wt%, of the hydrocarbon feedstock. In other preferred embodiments, the mineral oil component is from about 80 wt% to about 98 wt%, or more preferably from about 85 wt% to about 95 wt%, of the hydrocarbon feedstock.

### Mineral Oil Component

The processes and catalysts of invention herein are designed to process mixed hydrocarbon feedstock comprised of both a mineral oil (or "conventional oil") component and a biomass (or "biomass-derived") component. The mineral oil component is the component that is derived from "non-renewable" fossil/mineral oil reserves such as crude oils, tar sands bitumens, as well as liquid hydrocarbon streams derived from tar sands bitumen, coal, or oil shale. These are considered as "non-renewable" resources as the time frame required for production and replacement of these supplies of mineral oils is at least several thousands of years. Examples of mineral oils can include, but are not limited to, straight run (atmospheric) gas oils, vacuum gas oils, demetallized oils, coker distillates, cat cracker distillates, heavy naphthas, diesel boiling range distillate fraction, jet fuel boiling range distillate fraction, kerosene boiling range distillate fraction, and coal liquids. The mineral oil portion of the feedstocks herein can comprise any one of these example streams or any combination thereof.

In preferred embodiments of the invention herein, the mineral oil component contains at least 250 ppmw of sulfur. More preferably in the processes herein, the mineral oil component contains, at least 500 ppmw, or at least 1,000 ppmw, or at least 5,000 ppmw, or even at least 10,000 ppmw sulfur. The majority of the sulfur present in the mineral oil component will be organically bound sulfur.

### Biomass Component

Generally, the biological materials that make up the biomass component can include vegetable fats/oils, animal fats/oils, fish oils, pyrolysis oils, and algae lipids/oils, as well as components of such materials. In some embodiments, the biomass can include one or more type of lipid compounds, which are typically biological compounds that are insoluble in water, but soluble in nonpolar (or fat) solvents. Non-limiting examples of such solvents include alcohols, ethers, chloroform, alkyl acetates, benzene, and combinations thereof.

Major classes of lipids include, but are not necessarily limited to, fatty acids, glycerol-derived lipids (including fats, oils and phospholipids), sphingosine-derived lipids (including ceramides, cerebrosides, gangliosides, and sphingomyelins), steroids and their derivatives, terpenes and their derivatives, fat-soluble vitamins, certain aromatic compounds, and long-chain alcohols and waxes.

In living organisms, lipids generally serve as the basis for cell membranes and as a form of fuel storage. Lipids can also be found conjugated with proteins or carbohydrates, such as in the form of lipoproteins and lipopolysaccharides.

Examples of vegetable oils that can be used in accordance with this invention include, but are not limited to rapeseed (canola) oil, soybean oil, coconut oil, sunflower oil, palm oil, palm kernel oil, peanut oil, linseed oil, tall oil, corn oil, castor oil, jatropha oil, jojoba oil, olive oil, flaxseed oil, camelina oil, safflower oil, babassu oil, tallow oil and rice bran oil.

Vegetable oils as referred to herein can also include processed vegetable oil material. Non-limiting examples of processed vegetable oil material include fatty acids and fatty acid alkyl esters. Alkyl esters typically include C₁-C₅ alkyl esters. One or more of methyl, ethyl, and propyl esters are preferred.

Examples of animal fats that can be used in accordance with the invention include, but are not limited to, beef fat (tallow), hog fat (lard), turkey fat, fish fat/oil, and chicken fat. The animal fats can be obtained from any suitable source including restaurants and meat production facilities.

Animal fats as referred to herein also include processed animal fat material. Non-limiting examples of processed animal fat material include fatty acids and fatty acid alkyl esters. Alkyl esters typically include C₁-C₅ alkyl esters. One or more of methyl, ethyl, and propyl esters are preferred.

Algae oils or lipids are typically contained in algae in the form of membrane components, storage products, and metabolites. Certain algal strains, particularly microalgae such as diatoms and cyanobacteria, contain proportionally high levels of lipids. Algal sources for the algae oils can contain varying amounts, e.g., from 2 wt% to 40 wt% of lipids, based on total weight of the biomass itself. Additionally or alternately, algae can be genetically modified to produce oils that are not lipids, *e.g.,* that contain oxygenated hydrocarbons, such as wax esters, fatty ketones, fatty aldehydes, fatty alcohols, and the like. Further additionally or alternately, algae can be genetically modified to produce non-oxygenated hydrocarbons. In such cases, due to the genetic modifications, the algae may indeed exhibit an increased content of oil material and/or such oil material may advantageously have reduced oxygen content, compared to contents observable and/or attainable in conventional biomass.

Algal sources for algae oils include, but are not limited to, unicellular and multicellular algae. Examples of such algae can include a rhodophyte, chlorophyte, heterokontophyte, tribophyte, glaucophyte, chlorarachniophyte, euglenoid, haptophyte, cryptomonad, dinoflagellum, phytoplankton, and the like, and combinations thereof. In one embodiment, algae can be of the classes Chlorophyceae and/or Haptophyta. Specific species can include, but are not limited to, *Neochloris oleoabundans*, *Scenedesmus dimorphus, Euglena gracilis, Phaeodactylum tricornutum*, *Pleurochrysis carterae*, *Prymnesium parvum*, *Tetraselmis chui,* and *Chlamydomonas reinhardtii.* Additional or alternate nonlimiting examples of algae can include, but are not limited to, *Achnanthes*, *Amphiprora, Amphora, Ankistrodesmus, Asteromonas, Boekelovia, Borodinella, Botryococcus, Bracteococcus, Chaetoceros, Carteria, Chlamydomonas, Chlorococcum, Chlorogonium, Chlorella, Chroomonas, Chrysosphaera, Cricosphaera, Crypthecodinium, Cryptomonas, Cyclotella, Dunaliella, Ellipsoidon, Emiliania, Eremosphaera, Ernodesmius, Euglena, Franceia, Fragilaria, Gloeothamnion, Haematococcus, Halocafeteria, Hymenomonas, Isochrysis, Lepocinclis, Micractinium, Monoraphidium, Nannochloris, Nannochloropsis, Navicula, Neochloris, Nephrochloris, Nephroselmis, Nitzschia, Ochromonas, Oedogonium, Oocystis, Ostreococcus, Pavlova, Parachlorella, Pascheria, Phaeodactylum, Phagus, Platymonas, Pleurochrysis,, Pleurococcus, Prototheca, Pseudochlorella, Pyramimonas, Pyrobotrys, Scenedesmus, Schizochytrium, Skeletonema, Spyrogyra, Stichococcus, Tetraselmis, Thraustochytrium, Viridiella,* and *Volvox* species.

Other examples of prokaryotic organisms (whether wild-type or genetically modified), which include cyanobacterial species, from which oils qualifying as algae oils herein can be isolated/derived can include, but are not limited to, one or more of the following species: *Agmenellum, Anabaena, Anabaenopsis, Anacystis, Aphanizomenon, Arthrospira, Asterocapsa, Borzia, Calothrix, Chamaesiphon, Chlorogloeopsis, Chroococcidiopsis, Chroococcus, Crinalium, Cyanobacterium, Cyanobium, Cyanocystis, Cyanospira, Cyanothece, Cylindrospermopsis, Cylindrospermum, Dactylococcopsis, Dermocarpella, Fischerella, Fremyella, Geitleria, Geitlerinema, Gloeobacter, Gloeocapsa, Gloeothece, Halospirulina, Iyengariella, Leptolyngbya, Limnothrix, Lyngbya, Microcoleus, Microcystis, Myxosarcina, Nodularia, Nostoc, Nostochopsis, Oscillatoria, Phormidium, Planktothrix, Pleurocapsa, Prochlorococcus, Prochloron, Prochlorothrix, Pseudanabaena, Rivularia, Schizothrix, Scytonema, Spirulina*, *Stanieria, Starria, Stigonema, Symploca, Synechococcus, Synechocystis, Tolypothrix, Trichodesmium, Tychonema,* and *Xenococcus.*

In some embodiments the biomass component can comprise a fatty acid alkyl ester. In such embodiments, the fatty acid alkyl ester can preferably comprise fatty acid methyl esters (FAME), fatty acid ethyl esters (FAEE), and/or fatty acid propyl esters.

Additionally or alternately, the biomass component can include at least about 1 wt% oxygen, for example at least about 2 wt%, at least about 3 wt%, at least about 4 wt%, at least about 5 wt%, at least about 6 wt%, or at least about 8 wt%. The majority of the oxygen present in the biomass component will be organically bound oxygen.

### Reactor / Processes / Catalysts

The processes of the present invention preferably utilize a single reactor comprised of at least two catalyst beds with processes and catalysts for producing a desulfurized, deoxygenated, and dewaxed hydrocarbon motor fuel product stream from a hydrocarbon feedstock comprised of a mineral oil component and a biomass oil component. Preferably, by utilizing the processes and catalysts described herein, an existing refinery hydroprocessing reactor can be utilized to economically retrofit an existing conventional (mineral oil) refining process into a process for refining the hydrocarbon feedstocks herein which are comprised both the sulfur-containing mineral oil and oxygen-containing biomass oil components.

### First Reaction Zone

In the processes herein, the first reaction zone contains a catalyst operated under first hydroprocessing conditions suitable for both hydrodesulfurizing and deoxygenating the combined hydrocarbon feedstock comprising both a mineral oil component and a biomass oil component. This first reaction zone may contain multiple catalyst beds. However, in this zone, at least one of these catalysts beds is to be comprised of the "hydrodesulfurization/deoxygenation catalyst", or as may be alternately referred to herein as the "first catalyst", as further described herein.

This first catalyst is comprised of at least one Group VIII metal oxide, selected from Fe, Co and Ni, more preferably selected from Co and/or Ni, and most preferably Co; and at least one Group VI metal oxide, selected from Mo and W, more preferably Mo, on a high surface area support material, preferably comprising alumina, silica, or silica-alumina. Preferably, the Group VIII metal oxide of the hydrodesulfurization/deoxygenation catalyst is present in an amount ranging from about 0.1 to about 20 wt%, preferably from about 1 to about 12 wt%, based on the weight of the catalyst. The Group VI metal oxide is preferably present in an amount ranging from about 1 to about 50 wt%, preferably from about 2 to about 20 wt%, based on the weight of the catalyst.

The hydrodesulfurization/deoxygenation catalysts used in the practice of the present invention are preferably supported catalysts. Any suitable refractory catalyst support material, preferably inorganic oxide support materials, can be used as supports for the hydrodesulfurization/deoxygenation catalyst utilized in the present invention. Non-limiting examples of suitable support materials include: zeolites, alumina, silica, titania, calcium oxide, strontium oxide, barium oxide, carbons, zirconia, diatomaceous earth, lanthanide oxides including cerium oxide, lanthanum oxide, neodynium oxide, yttrium oxide, and praesodymium oxide; chromia, thorium oxide, urania, niobia, tantala, tin oxide, zinc oxide, and aluminum phosphate. Preferred are alumina, silica, and silica-alumina. More preferred is alumina.

Preferred conditions in this first reaction zone of the hydroprocessing reactor include contacting the hydrocarbon feedstock and a first hydrogen treat gas stream with the hydrodesulfurization/deoxygenation catalyst under first hydroprocessing conditions sufficient to produce a first reaction zone effluent which contains less organically bound sulfur than the feedstock and less organically bound oxygen than the hydrocarbon feedstock.

These first hydroprocessing conditions can comprise one or more of: a weight average bed temperature (WABT) from about 500°F (about 260°C) to about 800°F (about 427°C), for example from about 550°F (about 288°C) to about 700°F (about 371°C); a total pressure from about 300 psig (about 2.1 MPag) to about 3000 psig (about 20.7 MPag), for example from about 700 psig (about 4.8 MPag) to about 2000 psig (about 13.8 MPag); an LHSV from about 0.1 hr⁻¹ to about 20 hr⁻¹, for example from about 0.2 hr⁻¹ to about 10 hr⁻¹; and a hydrogen treat gas rate from about 500 scf/bbl (about 89 m³/m³) to about 10000 scf/bbl (about 1781 m³/m³), for example from about 750 scf/bbl (about 134 m³/m³) to about 7000 scf/bbl (about 1247 m³/m³) or from about 1000 scf/bbl (about 178 m³/m³) to about 5000 scf/bbl (about 890 m³/m³).

By the term "treat gas", "hydrogen treat gas" or "hydrogen treat gas stream" as used herein, it is meant a gas stream which can be either pure hydrogen or a hydrogen-containing gas, which contains hydrogen in an amount at least sufficient for the intended reaction purpose(s), optionally in addition to one or more other gases (*e.g*., nitrogen, light hydrocarbons such as methane, and the like, and combinations thereof) that generally do not adversely interfere with or affect either the reactions or the products. Impurities, such as H₂S, NH₃, CO, and CO₂ are typically undesirable and would typically be removed from, or reduced to desirably low levels in, the hydrogen treat gas before it is conducted to the reactor bed/zones(s). The treat gas stream introduced into the hydroprocessing reactor can preferably contains at least about 50 vol% hydrogen. However, the treat gas streams utilized herein more preferably contains at least 75 vol% hydrogen, more preferably at least 85 vol% hydrogen, or even at least 95 vol% hydrogen.

The first reaction zone effluent preferably contains less than 25 wt%, more preferably less than 10 wt% and most preferably less than 5 wt% of organically bound sulfur than exists in the hydrocarbon feedstock. In preferred embodiments, first reaction zone effluent contains less than 250 ppm, more preferably less than 100 ppm, even more preferably less than 50 ppm and most preferably less than 30 ppm of organically bound sulfur. The majority of the organic sulfur content of the hydrocarbon feedstream is converted into H₂S in this first reactor bed.

The first reaction zone effluent also preferably contains less than 50 wt%, more preferably, less than 25 wt% and most preferably less than 10 wt% of organically bound oxygen that exists in the hydrocarbon feedstock. In preferred embodiments, first reaction zone effluent contains less than less than 10,000 ppm, more preferably less than 5,000 ppm, even more preferably less than 1,000 ppm and most preferably less than 500 ppm of organically bound oxygen. The majority of the organic oxygen content is converted into H₂O (or "water", which also may be in the form of steam) in this first reaction zone. In embodiments, the water partial pressure in the first reaction zone effluent will be greater than 2 psia, or greater than 5 psia, or in some instances, even greater than 10 psia under these hydroprocessing conditions and these conditions will be experienced in the second reaction zone of the hydroprocessing reactor in the processes herein.

### Second Reaction Zone

In the processes herein, the first reaction zone effluent is passed to the second reaction zone without separation of the reaction components within the first reaction zone effluent stream. Additional streams, such as a second hydrogen treat gas stream, may be added to the first reaction zone effluent prior to, or simultaneous with, contact of the first reaction zone effluent with the catalyst(s) located in the second reaction zone of the hydroprocessing reactor.

In the processes herein, the second reaction zone contains a catalyst operated under process conditions suitable for catalytic hydrodewaxing the first reaction zone effluent, which has been derived from a combined hydrocarbon feedstock comprising both a mineral oil component and a biomass oil component. By the term "catalytic hydrodewaxing" (or conversely "dewaxing") as utilized herein, it is meant process where a hydrocarbon containing waxy molecules, including n-paraffins which contain at least 12 or more carbon atoms (i.e. "C₁₂+" hydrocarbons), are at least partially converted into isomers (i.e., "isomerized") in the presence of a catalyst and excess hydrogen. This second reaction zone may contain multiple catalysts beds. In this second reaction zone, at least one of these catalyst beds is to be comprised of the "dewaxing catalyst", or as may be alternatively referred to herein as the "second catalyst", as further described herein.

A particular problem in dewaxing the resulting first reaction zone effluent is the high content of water reactant products present in the resultant effluent from the first reaction zone. As noted prior, conventional dewaxing catalysts, in particular alumina supported dewaxing catalysts, can be physically unstable, resulting in catalyst loss as well as a corresponding decrease in hydroconversion efficiencies.

In order to be effective in the methods according to the invention, dewaxing catalyst compositions utilized in the second reaction zone should be capable of hydroisomerization/dewaxing while minimizing physical catalyst loss and maximizing/maintaining high conversion efficiencies. Optionally, the dewaxing catalyst compositions utilized according to the invention may additionally be capable of at least partially hydrocracking the first reactor bed effluent.

In some embodiments, the dewaxing catalyst composition can include as an additional hydrogenation component a Group VIB metal, such as W and/or Mo. Typically, the Group VIB metal(s) can be present when the Group VIII metal(s) comprise(s) a non-noble metal (such as Ni and/or Co). An example of such an embodiment could be a dewaxing catalyst composition that includes the following metals: NiW, NiMo, or NiMoW. When present, the dewaxing catalyst composition can include at least about 0.5 wt% of the Group VIB metal(s), for example at least about 1.0 wt%, at least about 2.5 wt%, or at least about 5.0 wt%. Additionally or alternately, the dewaxing catalyst composition can include about 20.0 wt% or less of the Group VIB metal(s), for example about 15.0 wt% or less, about 10.0 wt% or less, about 5.0 wt% or less, or about 1.0 wt% or less.

The binder comprises titanium.

In yet another embodiment, the binder consists essentially of titanium.

The form of the one or more metals may be metallic but typically comprises an oxide, carbide, nitride, phosphide, sulfide, or combination thereof (*e.g.,* a combination of a carbide and nitride could be a nitrile; a combination of a phosphide and an oxide could be a phosphate, a phosphite, a hypophosphite, or the like). Preferably, but not necessarily, the binder comprises titania (aka titanium dioxide). The dewaxing catalyst compositions according to the present invention may consist essentially of the aforementioned components or may optionally contain additional components, such as sources of other transition metals (*e.g*., Group V metals such as niobium), sources of rare earth metals, organic ligands (*e.g.,* as added or as precursors left over from oxidation and/or sulfidization steps), phosphorus compounds, boron compounds, fluorine-containing compounds, silicon-containing compounds, promoters, additional binders, fillers, or like agents, or combinations thereof. The Groups referred to herein refer to Groups of the CAS Version as found in the Periodic Table of the Elements in Hawley's Condensed Chemical Dictionary, 13th Edition.

Preferred conditions in the second reaction zone of the hydroprocessing reactor include contacting the hydrocarbon feedstock and a first hydrogen treat gas stream with the dewaxing catalyst under second hydroprocessing conditions sufficient to produce a second reaction zone effluent with improved cold flow properties, such as, but not limited to improved cloud point properties.

These second hydroprocessing conditions can comprise one or more of: a weight average bed temperature (WABT) from about 500°F (about 260°C) to about 800°F (about 427°C), for example from about 550°F (about 288°C) to about 700°F (about 371°C); a total pressure from about 300 psig (about 2.1 MPag) to about 3000 psig (about 20.7 MPag), for example from about 700 psig (about 4.8 MPag) to about 2000 psig (about 13.8 MPag); an LHSV from about 0.1 hr⁻¹ to about 20 hr⁻¹, for example from about 0.2 hr⁻¹ to about 10 hr⁻¹. Excess hydrogen can be added in the first reaction zone so as to provide excess hydrogen in the first reactor bed effluent to this second reaction zone. In preferred embodiments, a second hydrogen treat gas may be added to the first reaction zone effluent prior to, or simultaneously with the contacting of the first reaction zone effluent with the dewaxing catalyst located in the second reaction zone. In such case, a second hydrogen treat gas rate from about 200 scf/bbl (about 36 m³/m³) to about 5000 scf/bbl (about 890 m³/m³) is preferred.

The product of this second reaction zone processing is the "second reaction zone effluent". This effluent may be further processed by additional catalyst beds and/or reaction zones in the hydroprocessing reactor, but not to be limiting and simply for the sake of simplicity, we will continue to describe the processes herein in terms of an embodiment wherein only the first reaction zone and second reaction zones and associated catalysts beds are present in the hydroprocessing reactor. In such an embodiment of the invention, the second reaction zone effluent is withdrawn from the hydroprocessing reactor. Preferably at least a portion of the second reaction zone effluent is separated to form a gas phase product and a reactor effluent product. Additionally or optionally, the reaction zone effluent is withdrawn from the hydroprocessing reactor and sent to a fractionator tower wherein the gas phase product is removed from the reactor effluent product and the reactor effluent product is simultaneously fractionated into two or more different boiling range liquid product streams. In this latter embodiment, the term "reactor effluent product" is considered to be the combination of the liquid product streams fractionated unless otherwise designated as, or referred to as, a particular fraction of the overall reactor effluent product herein. By the term "liquid product" or "liquid product stream" as utilized in the context herein, it is meant the reactor product components of the present processes which are a liquid at standard (atmospheric) pressure and temperature.

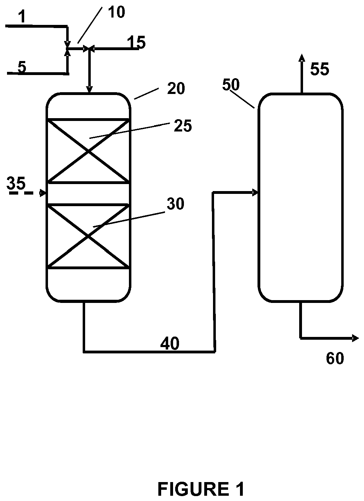

Figure 1 shows a simplified schematic of an embodiment of the process configuration herein wherein a single reactor is utilized with only two (2) reaction zones as have been described herein. Figure 1 also shows the optional use of a flash drum to separate the gas phase products from the second reaction zone effluent in order to form a reactor effluent product which can be further separated for motor fuel use.

In Figure 1, a mineral oil component **1** and a biomass oil component **5** are combined to form a combined hydrocarbon feedstock **10.** Although such combination is illustrated in the figure as occurring just prior to entering the hydroprocessing reactor **20** for simplicity, the invention is not so limited. Typically, the two component streams will be mixed in a portion of the process significantly prior to introduction into the hydroprocessing reactor **20.** The combined streams may additional undergo pre-processing prior to the step of the processes as illustrated in Figure 1.

Continuing with Figure 1, the combined hydrocarbon feedstock **10** (or simply referred to as the "hydrocarbon feedstocks" herein) enters the hydroprocessing reactor **20.** A first hydrogen treat gas stream **15** is combined with the hydrocarbon feedstock. In Figure 1, this combining is shown as mixing with the hydrocarbon feedstock stream **10** prior to entry into the reactor. However, the first hydrogen treat gas stream **15** may be introduced into the processes herein optionally, or additionally, directly into the hydroprocessing reactor **20.** The hydrogen feedstock **10** and first hydrogen treat gas **15** contact the catalyst(s) in the first reactor zone **25** under first hydroprocessing conditions as have been described herein. The first reaction zone **25** contains a hydrodesulfurization/deoxygenation catalyst as has been described in the details of the invention herein. The combined stream components pass through the catalyst(s) in the first reaction zone **25** where the components are catalytically converted into different molecular products and emerge from the first reaction zone as a first reaction zone effluent (not separately designated in the figure) which then passes to the second reaction zone **30** under second hydroprocessing conditions as have been described herein. Optionally, a second hydrogen treat gas stream **35** can be added to the process prior to the second reaction zone **30** as shown. The first reaction zone effluent is catalytically converted in the second reaction zone **30** to produce the product properties as described in the detailed description herein and can be withdrawn from the hydroprocessing reactor **20** as a second reaction zone effluent **40** as shown.

In the embodiment shown in Figure 1, a flash drum **50** is utilized to separate the second reaction zone effluent **40** into gas phase products **55** and a reactor effluent product **60.** Although not shown, the second reaction zone effluent **40** may undergo additional cooling prior to entering the flash drum **50.** The reactor effluent product **60** can then be further processed and/or separated into fractions for use in diesel, kerosene, jet, heating oil, marine, bunker fuels, and/or lubes.

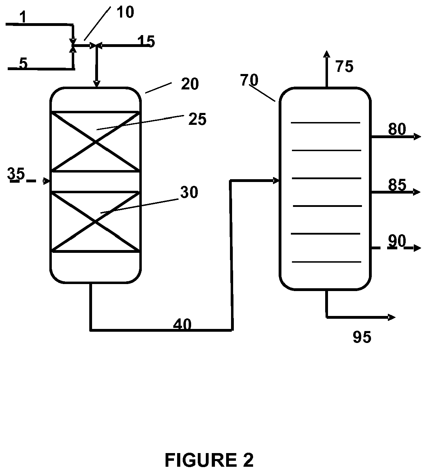

Figure 2 illustrates another optional embodiment of the processes herein. In this configuration, elements/processes **1** through **40** as were described in Figure 1 are essentially the same as shown in Figure 2. However, since a preferred use of the processes herein are to produce at least on motor fuel product stream, such as a naphtha stream (for gasoline blending) or distillate (for diesel blending) which meet motor fuel specifications while co-processing a combined mineral oil/biomass component stream, a fractionator tower **70** is utilized to directly separate the second reaction zone effluent **40** into useable motor fuel fractions.

Here the second reaction zone effluent **40** is shown entering a fractionator tower **70** and being split into various product streams. Here, a gas phase stream **75** is withdrawn from the overhead of the fractionation tower **70.** It should be noted that an option (not shown/detailed in Figure 2) would also be to utilize a flash drum (as shown as element **50** in Figure 1) to make an initial separation of the second reaction zone effluent **40** into a gas stream and liquid stream and then the liquid stream could be passed to the fractionator tower **70** for further separation as will be further described. Continuing with the configuration shown in Figure 2, gas phase stream **75** will primarily contain some hydrogen, incondensable products from the reaction process (such as hydrogen sulfide), water, and light petroleum gases or "LPGs" (such as propane and butane).

In preferred embodiments herein are least one, or both of, a naphtha range fraction **80** having a boiling range between 80°F (27°C) and 450°F (232°C) and/or a distillate range fraction **85** having a boiling range between 400°F (204°C) and 700°F (371°C) are drawn from the fractionator tower **70.** As described herein, these products will have improved product qualities for use in motor fuels. For instance, the naphtha range fraction will have lower sulfur than the hydrocarbon feed introduced to the process and preferably will be low enough in sulfur to meet motor gasoline specifications. The naphtha range fraction should also be improved in isomer content which will improve gasoline octane. Similarly, the resultant distillate product will have improved product qualities for use in a diesel motor fuel. The distillate range fraction will have lower sulfur than the hydrocarbon feed introduced to the process and preferably will be low enough in sulfur to meet motor diesel specifications. The distillate fraction will also have improved cloud point properties over the unprocessed distillate fraction of the combined hydrocarbon feedstock, and will preferably meet the commercial transportation and use specifications for diesel motor fuels without further conversion processing.

Continuing with Figure 2, optionally, if the hydrocarbon feedstock contains fractional components with boiling points significantly higher than distillate boiling ranges, a marine/bunker fuel fraction **90** can be withdrawn from the fractionation tower **70.** Additionally, in such cases, a lube oil fraction **95** may also be withdrawn from the fractionation tower **70.** The processes of invention herein are exceptionally useful in producing a low sulfur lube oil fraction with improved pour point and viscosity properties.

In preferred embodiments, the reactor effluent product will have a branched (iso-) paraffin content that is at least 10 wt% higher, and more preferably at least 20 wt% higher, and even more preferably at least 35 wt% higher than the branched (iso-) paraffin content of the combined hydrocarbon feedstock.

Additionally, in preferred embodiments herein, after separation of the gas phase stream from the second reaction zone effluent stream, the reactor effluent product stream preferably contains less than 25 wt%, more preferably less than 10 wt% and most preferably less than 5 wt% of the sulfur that is present in the hydrocarbon feedstock. In preferred embodiments, the reactor effluent product stream contains less than 250 ppm, more preferably less than 100 ppm, even more preferably less than 50 ppm and most preferably less than 30 ppm of sulfur.

Additionally, in preferred embodiments herein, after separation of the gas phase stream from the second reaction zone effluent stream, the reactor effluent product stream preferably contains less than 50 wt%, more preferably, less than 25 wt% and most preferably less than 10 wt% of the oxygen that is present in the hydrocarbon feedstock. In preferred embodiments, reactor effluent product stream contains less than less than 10,000 ppm, more preferably less than 5,000 ppm, even more preferably less than 1,000 ppm and most preferably less than 500 ppm oxygen.

In some embodiments, one or more portions of the reactor effluent product (or perhaps even the entire product) of the methods according to the present invention can advantageously be used as one or more transportation fuel compositions and/or may be sent to one or more existing fuel pools. Non-limiting examples of such fuel compositions/pools can include, but are not limited to, diesel, kerosene, jet, heating oil, marine, and/or bunker fuels. For instance, in one embodiment, the distillate portion(s) of the product can be split (*e.g.,* by fractionation or the like) into a kerosene cut having a boiling range between 400°F (204°C) and 550°F (288°C) and a diesel cut having a boiling range between 550°F (232°C) and 700°F (371°C).

In more preferred embodiments, a diesel boiling range fraction of the reactor effluent product is separated/isolated, and the diesel boiling range fraction can exhibit a cloud point that is less than 0°C, preferably less than -5°C, or less than -10°C, or less than -15°C, or less than -20°C, or less than -25°C, or less than -30°C, or less than -35°C, or less than -40°C.

### EXAMPLES

The examples herein illustrate the properties of the water tolerant catalysts herein to shown higher and maintain conversion activity over comparable catalysts of the prior art in aqueous phase hydroconversion processing.

### Example 1

Stearic acid feed was converted over a series of different catalyst compositions and at temperatures of about 250°C, about 275°C, about 300°C, and about 325°C. These catalyst compositions included <1 wt% Pt on alumina support/binder, <1 wt% Pt on ZSM-23 support (total metal on support was about 65% of catalyst weight) with titania binder (about 35% of catalyst weight), <1 wt% Pt on ZSM-48 support (total metal on support was about 65% of catalyst weight) with alumina binder (about 35% of catalyst weight), <1 wt% Pt on ZSM-48 support with titania binder, <1 wt% Pt on ZSM-5 support (total metal on support was about 65% of catalyst weight) with alumina binder (about 35% of catalyst weight), and ZSM-5 with no metal and no binder. At all temperatures tested, titania-containing (or, more broadly, non-alumina-containing) catalyst compositions exhibited higher conversion of the stearic acid feed than alumina-containing catalyst compositions. At about 275°C and above, the titania-(non-alumina-) containing catalysts all exhibited conversion levels of at least 15% (for example from about 20% to about 95%), whereas alumina-containing catalysts exhibited conversion levels below 10%. These conversion levels were based on calculations involving mass balances, which can also be a good indicator for the oxygen content. As deoxygenation can occur via decarboxylation and dehydration, assuming complete loss of the formed CO₂ and water at the reaction/processing conditions, conversion levels (at least for the decarbonylation/decarboxylation reaction) can tend to increase with decreasing mass balance. Catalysts with binders that are not hydrophilic and/or not hydrothermally stable, such as alumina-containing catalysts, show very low activity for deoxygenation of such feeds.

### Example 2

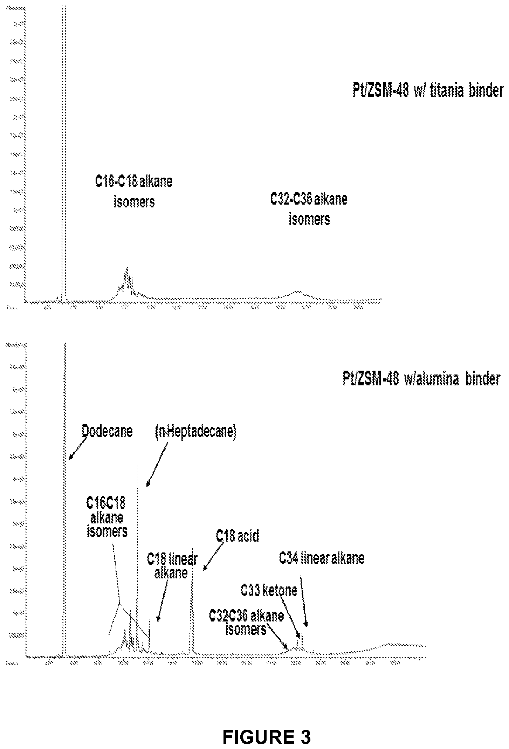

In Example 2, a direct comparison was made between the activity of two catalyst compositions that were identical, except for the binder. The first catalyst composition was <1 wt% Pt on ZSM-48 support with an alumina binder, whereas the second catalyst composition was <1 wt% Pt on ZSM-48 support with a titania binder. Stearic acid feed was converted over each catalyst at a temperature of about 325°C, with a weight hourly space velocity of about 0.3 hr⁻¹, and under a hydrogen partial pressure of about 400 psig (about 2.8 MPag). The product was analyzed using a gas chromatograph linked to a mass spectrometer (GC-MS). The spectral comparison is shown in Figure 3, with the titania binder at the top and the alumina binder at the bottom. The catalyst composition containing the titania binder showed substantially complete conversion of the feed from paraffin to branched (iso-) paraffin, with substantially complete deoxygenation as well. The pour point of this top sample was determined to be below about -50°C, based on analysis via differential scanning calorimetry (DSC), using a temperature rate of change of approximately 10°C/minute. The catalyst composition containing the alumina binder showed large amounts of unconverted stearic acid, with some limited deoxygenation but with only barely detectable (trace) amounts of conversion from paraffin to branched (iso-) paraffin. The pour point of this bottom sample was determined to be about +52°C, based on DSC analysis. For comparison, the pour point (melting point) of the stearic acid feed was about +69°C.

The principles and modes of operation of this invention have been described above with reference to various exemplary and preferred embodiments. As understood by those of skill in the art, the overall invention, as defined by the claims, encompasses other preferred embodiments not specifically enumerated herein.

## Claims

1. A method for processing a hydrocarbon feedstock comprised of a mineral oil component and a biomass oil component to form at least one liquid motor fuel product, such method comprising:
a) contacting the hydrocarbon feedstock and a first hydrogen treat gas stream with a hydrodesulfurization/deoxygenation catalyst comprising at least one Group VIII metal oxide selected from Fe, Co and Ni, and at least one Group VIB metal oxide selected from Mo and W, in a first reaction zone of a hydroprocessing reactor under first hydroprocessing conditions sufficient to produce a first reaction zone effluent which contains less organically bound sulfur than the hydrocarbon feedstock and less organically bound oxygen than the hydrocarbon feedstock;
b) contacting the first reaction zone effluent with a dewaxing catalyst in a second reaction zone of the hydroprocessing reactor under second hydroprocessing conditions sufficient to produce a second reaction zone effluent;
c) separating a gas phase product stream from the second reaction zone effluent to produce a reactor effluent product which has a lower sulfur content and a lower oxygen content than the hydrocarbon feedstock; and
d) producing at least one liquid motor fuel product from at least a portion of the reactor effluent product;
wherein the dewaxing catalyst is comprised of ZSM-48, and a Group VIII metal selected from palladium and platinum with a metal content from 0.1 wt% to 3.0 wt% based on the weight of the ZSM-48, and a titania binder.

2. The method of any prior claim, wherein the hydrodesulfurization/deoxygenation catalyst further comprises a support selected from alumina, silica, and silica-alumina.

3. The method of any prior claim, wherein the first hydroprocessing conditions include one or more of: a weight average bed temperature (WABT) from 500°F (260°C) to 800°F (427°C); a total pressure from 300 psig (2.1 MPag) to 3000 psig (20.7 MPag); an LHSV from 0.1 hr⁻¹ to 20 hr⁻¹; a hydrogen treat gas rate from 500 scf/bbl (89 m³/m³) to 10000 scf/bbl (1781 m³/m³), and a water partial pressure of greater than 2 psia. (0.014 MPa)

4. The method of any prior claim, wherein the second hydroprocessing conditions include one or more of: a weight average bed temperature (WABT) from 500°F (260°C) to 800°F (427°C); a total pressure from 300 psig (2.1 MPag) to 3000 psig (20.7 MPag); an LHSV from 0.1 hr⁻¹ to 20 hr⁻¹, and a water partial pressure of greater than 2 psia. (0.014 MPa)

5. The method of any prior claim, wherein the hydrocarbon feedstock contains from 80 wt% to 98 wt% of the mineral oil component and from 2 wt% to 20 wt% of the biomass oil component, the mineral oil component contains at least 500 ppmw sulfur, and the reactor effluent product contains less than 100 ppmw sulfur.

6. The method of any prior claim, wherein the biomass oil component is derived from algae.

7. The method of any prior claim, wherein the hydrocarbon feedstock has a T5 boiling point of at least 200°F (93°C) and a T95 boiling point of less than 800°F (427°C).

8. The method of any prior claim, wherein the at least one liquid motor fuel product is produced from a diesel boiling range fraction of the reactor effluent product wherein the cloud point of the diesel boiling range fraction is less than 0°C, wherein the reactor effluent product has a branched (iso-) paraffin content that is at least 20 wt% higher than the branched (iso-) paraffin content of the hydrocarbon feedstock.

## Patentansprüche

1. Verfahren zur Bearbeitung von Kohlenwasserstoff-Einsatzmaterial, das eine Mineralöl-Komponente und eine Biomasseöl-Komponente umfasst, um mindestens ein flüssiges Motorbrennstoff-Produkt zu bilden, bei dem das Verfahren umfasst:
a) In-Kontakt-Bringen des Kohlenwasserstoff-Einsatzmaterials und eines ersten Wasserstoffbehandlungsgasstroms mit einem Hydrodesulfurisierungs-/Deoxygenierungskatalysator, der mindestens ein Gruppe VIII-Metalloxid ausgewählt aus Fe, Co und Ni und mindestens ein Gruppe VIB-Metalloxid ausgewählt aus Mo und W umfasst, in einer ersten Reaktionszone eines Hydrobearbeitungsreak tors unter ersten Hydrobearbeitungsbedingungen, die ausreichen, um ein Austrittsmaterial der ersten Reak-tionszone zu erzeugen, das weniger organisch-gebundenen Schwefel enthält als das Kohlenwasserstoff-Einsatzmate-rial und weniger organisch-gebundenen Sauerstoff enthält als das Kohlenwasserstoff-Einsatzmaterial;
b) In-Kontakt-Bringen des Austrittsmaterials der ersten Reaktionszone mit einem Entparaffinierungskatalysator in einer zweiten Reaktionszone des Hydrobearbeitungsreaktors unter zweiten Hydrobearbeitungsbedingungen, die ausreichen, um ein Austrittsmaterial der zweiten Reaktionszone zu erzeugen;
c) Abtrennen eines Gasphasenproduktstroms aus dem Austrittsmaterial der zweiten Reaktionszone, um ein Reaktoraustrittsmaterial zu erzeugen, das einen niedrigeren Schwefelgehalt und einen niedrigeren Sauerstoffgehalt aufweist als das Kohlenwasserstoff-Einsatzmaterial; und
d) Erzeugen mindestens eines flüssigen Motorbrennstoffprodukts aus mindestens einem Teil des Reaktoraustritts-materials;
wobei der Entparaffinierungskatalysator ZSM-48 und ein Gruppe VIII-Metall ausgewählt aus Palladium und Platin mit einem Metallgehalt von 0,1 Gew.-% bis 3,0 Gew.-%, bezogen auf das Gewicht des ZSM-48, und einen Titandioxid-Binder umfasst.

2. Verfahren nach einem vorherigen Anspruch, bei dem der Hydrodesulfurisierungs-/Deoxygenierungskatalysator ferner einen Träger ausgewählt aus Aluminiumoxid, Siliciumdioxid und Siliciumdioxid-Aluminiumoxid umfasst.

3. Verfahren nach einem vorherigen Anspruch, bei dem die Hydrobearbeitungsbedingungen eines oder mehrere von einer durchschnittlichen, gewichtsmäßigen Betttemperatur (WABT) von 500°F (260°C) bis 800°F (427°C), einem Gesamtdruck von 300 psig (2,1 MPag) bis 3000 psig (20,7 MPag), einem L H S V von 0,1 Std⁻¹ bis 20 Std⁻¹, einer Wasserstoffbehandlungsgasrate von 500 scf/bbl (89 m³/m³) bis 10000 scf/bbl (1781 m³/m³) und einem Wasserpartialdruck von mehr als 2 psia (0,014 MPa) einschließen.

4. Verfahren nach einem vorherigen Anspruch, bei dem die Hydrobearbeitungsbedingungen eines oder mehrere von einer durchschnittlichen gewichtsmäßigen Betttemperatur (WABT) von 500°F (260°C) bis 800°F (427°C), einem Gesamtdruck von 300 psig (2,1 MPag) bis 3000 psig (20,7 MPag), einem LHSV von 0,1 Std⁻¹ bis 20 Std⁻¹ und einem Wasserpartialdruck von mehr als 2 psia (0,014 MPa) einschließen.

5. Verfahren nach einem vorherigen Anspruch, bei dem das Kohlenwasserstoff-Einsatzmaterial 80 Gew.-% bis 98 Gew.-% von der Mineralöl-Komponente und 2 Gew.-% bis 20 Gew.-% von der Biomasseöl-Komponente enthält, wobei die Mineralöl-Komponente mindestens 500 Gew.-ppm Schwefel enthält und das Reaktoraustrittsmaterialprodukt weniger als 100 Gew.-ppm Schwefel enthält.

6. Verfahren nach einem vorherigen Anspruch, bei dem die Biomasseöl-Komponente sich von Algen ableitet.

7. Verfahren nach einem vorherigen Anspruch, bei dem das Kohlenwasserstoff-Einsatzmaterial einen T5-Siedpunkt von mindestens 200°F (93°C) und einen T95-Siedpunklt von unter 800°F (427°C) aufweist.

8. Verfahren nach einem vorherigen Anspruch, bei dem das mindestens eine flüssige Motorbrennstoffproduktaus einer Dieselsiedepunktbereich-Fraktion des Reaktoraustrittsmaterialprodukts erzeugt wird, wobei der Trübungspunkt der Dieselsiedepunktbereich-Fraktion unter 0°C liegt, wobei das Reaktoraustrittsmaterialprodukt einen Gehalt an verzweigtem (Iso)-Paraffin aufweist, der mindestens 20 Gew.-% höher ist als der Gehalt an verzweigtem (Iso)-Paraffin des Kohlenwasserstoff-Einsatzmaterials.

## Revendications

1. Procédé pour le traitement d'une charge de départ d'hydrocarbures constituée d'un constituant huile minérale et d'un constituant huile de biomasse pour former au moins un produit carburant pour moteur liquide, un tel procédé comprenant :
a) la mise en contact de la charge de départ d'hydrocarbures et d'un premier flux de gaz de traitement à l'hydrogène avec un catalyseur d'hydrodésulfuration/désoxygénation comprenant au moins un oxyde de métal du groupe VIII choisi entre Fe, Co et Ni et au moins un oxyde de métal du groupe VIB choisi entre Mo et W, dans une première zone de réaction d'un réacteur d'hydrotraitement dans des premières conditions d'hydrotraitement suffisantes pour produire un effluent de première zone de réaction qui contient moins de soufre lié de façon organique que la charge de départ d'hydrocarbures et moins d'oxygène lié de façon organique que la charge de départ d'hydrocarbures ;
b) la mise en contact de l'effluent de première zone de réaction avec un catalyseur de déparaffinage dans une seconde zone de réaction du réacteur d'hydrotraitement dans des secondes conditions d'hydrotraitement suffisantes pour produire un effluent de seconde zone de réaction ;
c) la séparation d'un flux de produit en phase gazeuse à partir de l'effluent de seconde zone de réaction pour produire un produit effluent de réacteur qui a une plus faible teneur en soufre et une plus faible teneur en oxygène que la charge de départ d'hydrocarbures ; et
d) la production d'au moins un produit carburant pour moteur liquide à partir d'au moins une partie du produit effluent de réacteur ;
dans lequel le catalyseur de déparaffinage est constitué de ZSM-48, et d'un métal du groupe VIII choisi entre le palladium et le platine avec une teneur en métal de 0,1 % en poids à 3,0 % en poids par rapport au poids de la ZSM-48, et d'un liant à base de dioxyde de titane.

2. Procédé selon une quelconque revendication précédente, dans lequel le catalyseur d'hydrodésulfuration/désoxygénation comprend en outre un support choisi entre l'alumine, la silice et la silice-alumine.

3. Procédé selon une quelconque revendication précédente, dans lequel les premières conditions d'hydrotraitement en comprennent une ou plusieurs parmi : une température de lit moyenne en poids (WABT) de 500 °F (260 °C) à 800 °F (427 °C) ; une pression totale de 300 lb/po² (rel.) (2,1 MPa (rel.)) à 3000 lb/po² (rel.) (20,7 MPa (rel.)) ; une LHSV de 0,1 h⁻¹ à 20 h⁻¹ ; un taux de gaz de traitement à l'hydrogène de 500 pi³ (std)/bl (89 m³/m³) à 10000 pi³ (std)/bl (1781 m³/m³) et une pression partielle d'eau supérieure à 2 lb/po² (abs.) (0,014 MPa).

4. Procédé selon une quelconque revendication précédente, dans lequel les secondes conditions d'hydrotraitement en comprennent une ou plusieurs parmi : une température de lit moyenne en poids (WABT) de 500 °F (260 °C) à 800 °F (427 °C) ; une pression totale de 300 lb/po² (rel.) (2,1 MPa (rel.)) à 3000 lb/po² (rel.) (20,7 MPa (rel.)) ; une LHSV de 0,1 h⁻¹ à 20 h⁻¹ et une pression partielle d'eau supérieure à 2 lb/po² (abs.) (0,014 MPa).

5. Procédé selon une quelconque revendication précédente, dans lequel la charge de départ d'hydrocarbures contient de 80 % en poids à 98 % en poids du constituant huile minérale et de 2 % en poids à 20 % en poids du constituant huile de biomasse, le constituant huile minérale contient au moins 500 ppm en poids de soufre et le produit effluent de réacteur contient moins de 100 ppm en poids de soufre.

6. Procédé selon une quelconque revendication précédente, dans lequel le constituant huile de biomasse est issu d'algues.

7. Procédé selon une quelconque revendication précédente, dans lequel la charge de départ d'hydrocarbures a un point d'ébullition T5 d'au moins 200 °F (93 °C) et un point d'ébullition T95 inférieur à 800 °F (427 °C).

8. Procédé selon une quelconque revendication précédente, dans lequel l'au moins un produit carburant pour moteur liquide est produit à partir d'une fraction du produit effluent de réacteur ayant un intervalle de distillation de diesel, dans lequel le point de trouble de la fraction ayant un intervalle de distillation de diesel est inférieur à 0 °C, dans lequel le produit effluent de réacteur a une teneur en (iso)paraffines ramifiées qui est au moins 20 % en poids supérieure à la teneur en (iso)paraffines ramifiées de la charge de départ d'hydrocarbures.
